# EUROPÄISCHE PATENTSCHRIFT

(11) **EP 3 688 080 B1**
(45) Veröffentlichungstag und Bekanntmachung des Hinweises auf die Patenterteilung: **18.11.2020**
(21) Anmeldenummer: 19783078.9
(22) Anmeldetag: 11.10.2019
(51) Int. Cl.: C08J 9/00, C08G 69/40, C08L 77/06, C08F 20/52, C08G 101/00, C08J 9/12

(54) **POLYETHERBLOCKAMID-POLY(METH)ACRYLAT-SCHÄUME**
POLYETHER BLOCKAMIDE POLY(METH)ACRYLATE FOAMS
MOUSSES DE POLY(MÉTH)ACRYLATE - POLYÉTHER BLOC AMIDE

(30) Priorität: 16.10.2018 EP 18200738
(43) Veröffentlichungstag der Anmeldung: 05.08.2020
(73) Patentinhaber: Evonik Operations GmbH, 45128 Essen (DE); Röhm GmbH, 64295 Darmstadt (DE)
(72) Erfinder: SALWICZEK, Kathrin, 45665 Recklinghausen (DE); RICHTER, Alexander, 45721 Haltern am See (DE); WEISS, Christine, 46282 Dorsten (DE); LULEY, Wolfgang, 64347 Griesheim (DE); WEBER, Andreas, 60596 Frankfurt (DE); DÖSSEL, Lukas Friedrich, 65795 Hattersheim am Main (DE); BAILEY, David, 45657 Recklinghausen (DE); RICHTER, Ralf, 63457 Hanau (DE); KRILL, Steffen, 64357 Mühltal (DE); VORHOLZ, Johannes, 63755 Alzenau (DE); KUHN, Maren, 46514 Schermbeck (DE)
(74) Vertreter: Evonik Patent Association
(86) Internationale Anmeldenummer: PCT/EP2019/077636
(87) Internationale Veröffentlichungsnummer: WO 2020/078856

(56) Entgegenhaltungen:
- WO-A1-2017/167197
- DE-A1-102014 216 992
- US-A1- 2005 014 842

## Beschreibung

Die vorliegende Erfindung betrifft Gemische aus aminogeregeltem Polyetherblockamid und Poly(meth)acrylaten, ein geschäumtes Formteil dieser Gemische, ein Verfahren zur Herstellung dieser Formteile sowie ihre Verwendung.

Polymerschäume werden industriell in großen Maßstäben eingesetzt. Polyetherblockamide (PEBA) als Bestandteil in Schaummaterial sind bereits bekannt. Wird jedoch PEBA ohne Zusätze aufgeschäumt, wird kein stabiler Schaum erhalten: Der geschäumte Formkörper fällt in sich zusammen.

Polyetherblockamide (PEBA) sind Blockcopolymere, welche durch Polykondensation von (Oligo-)Polyamiden, insbesondere säuregeregelten Polyamiden, mit alkohol- oder aminoterminierten Polyethern erhalten werden. Säuregeregelte Polyamide weisen Carbonsäureendgruppen im Überschuss auf. Die Polyamidblöcke bezeichnet der Fachmann als Hartblöcke und die Polyesterblöcke als Weichblöcke.

Aus WO 2017/167197 sind Polymermischungen bekannt, die 20 bis 99 % eines Thermoplasten und 1-80 % Schaumpartikel aus Poly(meth)acrylimid enthalten. DE 102014216992 beschreibt Verfahren zur Herstellung von expandierten Polymerpellets aus Polyamid wie beispielsweise PEBA, welche beispielsweise für die Herstellung von Dämpfungselementen für Sportkleidung verwendet werden können.

Insofern war es Aufgabe der vorliegenden Erfindung, geeignete Mischungen auf Basis von PEBA zu finden, welche einen stabilen und leichten Schaum aufweisen. Die Dichte sollte derart gering sein, dass eine signifikante Gewichtsreduzierung im Bauteil erreicht werden kann. Darüber hinaus sollte ein Weichschaum erhalten werden, der eine gewissen Flexibilität sowie Rebounce- bzw. Rückstellverhalten zeigt. Das erhaltene geschäumte Formteil sollte einer hohen mechanischen Belastbarkeit und eine hohe Schaumstabilität aufweisen. Der Schaum sollte eine homogene Zellverteilung und eine einheitliche Zellgröße aufweisen.

Gelöst werden konnte diese Aufgabe durch ein Gemisch enthaltend aminogeregeltes PEBA und mindestens ein Poly(meth)acrylat, wobei das Massenverhältnis PEBA zu Poly(meth)acrylat 95:5 bis 60:40 beträgt. Das Poly(meth)acrylat ist ausgewählt aus Poly(meth)acrylimiden, Polyalkyl(meth)acrylaten sowie Mischungen daraus.

PEBA kann beispielsweise aus der Reaktion von Polyamiden mit Polyethern wie Polyetherdiolen oder Polyetherdiaminen erhalten werden. Die Herstellung von PEBA wird beispielsweise in EP-A-1518901 (US 2005/014842) beschrieben.

Geeignete Polyamide (PA) sind beispielsweise PA6, PA11, PA12, PA613, PA1012, PA612, PA109, PA1013, PA1010 und PA69. Sie können aus Lactamen bzw. ω-Aminocarbonsäuren oder aus der Reaktion von Diaminen mit Dicarbonsäuren hergestellt werden.

Geeignete Polyetherdiole sind beispielsweise 1,4-Butandiol, 1,3-Butandiol, 1,3-Propandiol, Ethylenglycol oder Polytetrahydrofuran. Auch Mischpolyetherdiolblöcke mit statistischer oder mit blockweiser Verteilung können eingesetzt werden. Sie besitzen in der Regel eine zahlenmittlere Molmasse von ca. 230 bis 4000.

Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0434244; EP-A-0296852). Sie besitzen in der Regel eine zahlenmittlere Molmasse von ca. 230 bis 4000. Kommerziell verfügbare Polyetherdiamine ausgehend von Propylenglykol sind als JEFFAMIN D-Typen bei der Fa. Huntsman kommerziell erhältlich.

Der Anteil an Polyether im PEBA beträgt vorzugsweise 10 bis 50 Gew-%, bevorzugt 20 bis 40 Gew.-%, jeweils bezogen auf das Gesamtgewicht an PEBA.

Geeignete PEBA können eine Shore-Härte D von 30 bis 70 aufweisen, vorzugsweise von 35 bis 65. Die Shore-Härte D wird gemessen nach ISO 868 bei 23 °C ± 2 °C.

Das PEBA ist aminogeregelt. Dieses weist somit einen Überschuss an Aminoendgruppen auf. Vorzugsweise weist das aminogeregelte PEBA einen Überschuss von 20 bis 60 mmol Aminoendgruppen pro kg PEBA auf, bevorzugt 30 bis 50 mmol / kg.

Die Gemische enthalten neben PEBA weiterhin Poly(meth)acrylate, die Poly(meth)acrylimide, Polyalkyl(meth)acrylate oder Mischungen daraus umfassen. Die Schreibweise (Meth)acrylat bedeutet hier sowohl Methacrylat, wie z. B. Methylmethacrylat, Ethylmethacrylat usw., als auch Acrylat, wie z. B. Methylacrylat, Ethylacrylat usw., sowie deren Mischungen.

Poly(meth)acrylimide weisen vorzugsweise wiederkehrende Einheiten auf, die durch Formel (IV) darstellbar sind, 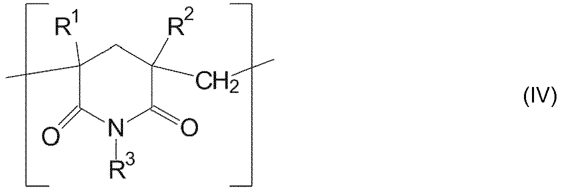 worin R¹ und R² gleich oder verschieden Wasserstoff oder eine Methylgruppe und R³ Wasserstoff, ein Alkylrest mit 1 bis 20 Kohlenstoffatomen oder ein Arylrest mit 3 bis 20 Kohlenstoffatomen bedeuten. Bevorzugt ist eine Verbindung (IV), worin die drei Reste R¹, R² und R³ je eine Methylgruppe sind.

Bevorzugte Poly(meth)acrylimide umfassen die folgenden Gruppen a) N-Acrylalkylimid nach Formel (IV), b) (Meth)acrylsäure, c) (Meth)acrylsäureanhydrid, d) (Meth)acrylat, wobei die Gruppen a) - d) zu jeweils mindestens 1 Gew-%, bezogen auf das Gesamtgewicht an Poly(meth)acrylimid, enthalten sind. Vorzugsweise enthält das Poly(meth)acrylimid 10 - 95 Gew.-%, bevorzugt 20 - 70 Gew.-% und besonders bevorzugt 25 - 40 Gew.-% an N-Acrylalkylimid der Formel (IV). Die Summe der Gruppen b) und c) liegt vorzugsweise im Bereich von 5 - 20 Gew.-%, bevorzugt im Bereich von 8 - 17 Gew.-% und besonders bevorzugt im Bereich von 10 - 15 Gew.-% liegen. Die Poly(meth)acrylimide können e) weitere Monomere enthalten. Ihr Anteil liegt üblicherweise < 10 Gew.-%. Die Anteile beziehen sich auf das Gesamtgewicht an Poly(meth)acrylimid. Sie können mittels NMR- oder IR-Spektroskopie bestimmt werden.

Typische Molekulargewichte M_{w} des Poly(meth)acrylimids liegen im Bereich von 50000 - 150000 g/mol und bevorzugt bei 90000 - 110000 g/mol (ermittelt durch GPC gegen PMMA-Standard).

Ein geeignetes bevorzugtes Poly(meth)acrylimid ist Poly(N-methyl)methacrylimid (PMMI). In einer besonders bevorzugten Ausführungsform der Erfindung weist ein Poly(meth)acrylimid 25 - 35 Gew.% N-Acrylalkylimid der Formel (IV) auf, worin die drei Reste R¹, R² und R³ je eine Methylgruppe sind, 1 bis 5 Gew.-% Methacrylsäure-Gruppen, 5 bis 20 Gew.-% Methacrylsäureanyhdrid-Gruppen und 40 bis 65 Gew.-% Methylmethacylat-Gruppen auf.

Die Herstellung von Poly(meth)acrylimiden ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) oder DE-A-10 2008 001 695 (= US 2011/015317 A1) offenbart.

Darüber hinaus können diese Polymere weitere Monomereinheiten enthalten, die sich beispielsweise aus Estern der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Das Polyalkyl(meth)acrylat kann einzeln oder auch in Mischung von mehreren verschiedenen Polyalkyl(meth)acrylaten eingesetzt werden. Des Weiteren kann das Polyalkyl(meth)acrylat auch in Form eines Copolymers vorliegen.

Im Rahmen der vorliegenden Erfindung werden Homo- und Copolymere von C1-C18-Alkyl(meth)acrylaten, zweckmäßigerweise von C1-C10-Alkyl(meth)acrylaten, insbesondere von C1-C4-Alkyl(meth)acrylat-polymeren, die ggf. noch davon verschiedene Monomereinheiten enthalten können, besonders bevorzugt.

Polyalkyl(meth)acrylate enthalten 80 Gew.-% bis 99 Gew.-% Methylmethacrylat (MMA)-Einheiten und 1 Gew.-% bis 20 Gew.-%, vorzugsweise 1 Gew.-% bis 5 Gew.-%, C1-C10-Alkylacrylat-Einheiten, bezogen auf das Gesamtgewicht an Polyalkyl(meth)acrylat. Besonders bevorzugte C1-C10-Akylacrylat-Einheiten sind Methylacrylat-, Ethylacrylat- und Butylacrylat-Einheiten sowie ihre Mischungen.

Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel - Heidelberg - New York; US 2 146 209, US 4 246 374).

Die Verwendung von Copolymeren, die 70 Gew.-% bis 99 Gew.-%, insbesondere 70 Gew.-% bis 90 Gew.-%, C1-C10-Alkylmethacrylate, enthalten, bezogen auf das Gesamtgewicht an Copolymeren, hat sich ganz besonders bewährt. Bevorzugte C1-C10-Alkylmethacrylate umfassen Methylmethacrylat, Ethylmethacrylat, Propylmethacrylat, Isopropylmethacrylat, n-Butylmethacrylat, Isobutylmethacrylat, tert.-Butylmethacrylat, Pentylmethacrylat, Hexylmethacrylat, Heptylmethacrylat, Oktylmethacrylat, Isooctylmethacrylat und Ethylhexylmethacrylat, Nonylmethacrylat, Decylmethcrylat sowie Cycloalkylmethacrylate, wie beispielsweise Cyclohexylmethacrylat, Isobornylmethacrylat oder Ethylcyclohexylmethacrylat.

Ganz besonders bevorzugte Copolymere umfassen 70 Gew.-% bis 99 Gew.-% Methylmethacrylat (MMA)-Einheiten und 1 Gew.-% bis 20 Gew.-%, vorzugsweise 1 Gew.-% bis 5 Gew.-%, C1-C10-Alkylacrylat-Einheiten, bezogen auf das Gesamtgewicht an Copolymeren, insbesondere Methylacrylat-, Ethylacrylat- und/oder Butylacrylat-Einheiten. Ein weiteres bevorzugtes Comonomer ist Styrol.

Polymethylmethacrylat (PMMA) ist ein besonders bevorzugtes Polyalkyl(meth)acrylat.

Ein bewährtes Polymethylmethacrylat enthält 1 Gew.-% - 18 Gew.-% Methylacrylat und 82 Gew.-% - 99 Gew.-% Methylmethacrylat, besonders bevorzugt 2 Gew.-% - 10 Gew.-% Methylacrylat und 90 Gew.-% - 98 Gew.-% Methylmethacrylat und ganz besonders bevorzugt 3 Gew.-% - 6 Gew.-% Methylacrylat und 94 Gew.-% - 97 Gew.-% Methylmethacrylat, jeweils bezogen auf das Gesamtgewicht aus Methylacrylat und Methylmethacrylat. Das Molekulargewicht Mw liegt bevorzugt zwischen 70000 g/mol und 240000 g/mol, besonders bevorzugt zwischen 80000 g/mol und 220000 g/mol und ganz besonders bevorzugt zwischen 90000 g/mol und 200000 g/mol. Darüber hinaus können diese Polymere weitere Monomereinheiten enthalten, die sich beispielsweise aus Estern der Acryl- oder Methacrylsäure, insbesondere mit niedrigen Alkoholen mit 1 - 4 C-Atomen, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen. Unter cyclisierbaren Monomeren werden α-, β- ungesättigte, funktionalisierte Systeme verstanden, die am vinylischen Rest eine in der Literatur als EWG (= eletron withdrawing group) beschriebene Funktionalität tragen. Exemplarisch für Systeme mit EWG-Funktionalität seien genannt Moleküle mit Nitrilgruppe oder Carbonsäuren sowie deren Ester. Nicht cyclisierbare, aber vinylisch polymerisierbare Monomere fallen nicht hierunter, beispielhaft seien hier genannt α-Methylstyrol, Styrol, Vinylacetat, Vinylpyrolidon, Ethylen, Propylen, Vinylclorid, Vinylidenchlorid, Isopren, Butadien, Vinylether oder Isobutylen.

Ebenso können schlagzähmodifizierte Polymere eingesetzt werden. Ein bevorzugtes schlagzähmodifiziertes Polymer weist eine Kern-/Schale-Struktur auf. Besonders bevorzugt sind Polybutadien-basierte Kerne, die mit einer Schale gepfropft sind. Die Schale kann ausgewählt werden aus Methylmethacrylat, Methylacrylat, Ethyl(meth)acrylat, Styrol, Acrylnitril sowie Mischungen hieraus. Derartige Polymere sind beispielhaft in WO 2002/062890 A1 beschrieben.

Das Polyalkyl(meth)acrylat kann durch an sich bekannte Polymerisationsverfahren hergestellt werden, wobei radikalische Polymerisationsverfahren, insbesondere Substanz-, Lösungs-, Suspensions- und Emulsionspolymerisationsverfahren besonders bevorzugt werden. Für diese Zwecke besonders geeignete Initiatoren umfassen insbesondere Azoverbindungen, wie 2,2'-Azobis-(isobutyronitril) oder 2,2'-Azo-bis(2,4-dimethylvaleronitril), Redox-Systeme, wie beispielsweise die Kombination von tertiären Aminen mit Peroxiden oder Natriumdisulfit und Persulfate von Kalium, Natrium oder Ammonium oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele besonders geeigneter Peroxid-Polymerisationsinitiatoren sind Dilauroylperoxid, tert.-Butylperoctoat, tert.-Butylperisononanoat, Dicyclohexylperoxidicarbonat, Dibenzoylperoxid und 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen, beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im Allgemeinen bei 0,01 Gew.-% bis 2 Gew.-% bezogen auf das Monomerengemisch.

Die Polymerisation kann sowohl kontinuierlich als auch chargenweise durchgeführt werden. Nach der Polymerisation wird das Polymer über herkömmliche Isolier- und Trennschritte, wie z. B. Filtration, Koagulation, Sprühtrocknung oder Entgasungsextrusion gewonnen. Bei Plattenpolymerisaten (Substanz) erfolgt in der Regel keine weitere Aufarbeitung im obigen Sinne.

Die Einstellung der Kettenlängen der Polymerisate oder Copolymerisate kann durch Polymerisation des Monomers oder Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol oder 2-Ethylhexylthioglycolat, Pentaerythrittetrathioglycolat; wobei die Molekulargewichtsregler im Allgemeinen in Mengen von 0,05 Gew.-% bis 5 Gew.-% bezogen auf das Monomer oder Monomerengemisch, bevorzugt in Mengen von 0,1 Gew.-% bis 2 Gew.-% und besonders bevorzugt in Mengen von 0,2 Gew.-% bis 1 Gew.-%, bezogen auf das Monomer oder Monomerengemisch, eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978). Besonders bevorzugt wird als Molekulargewichtsregler n-Dodecylmercaptan eingesetzt.

Vorzugsweise enthält das erfindungsgemäße Gemisch mindestens eine Verbindung der Formel (I) 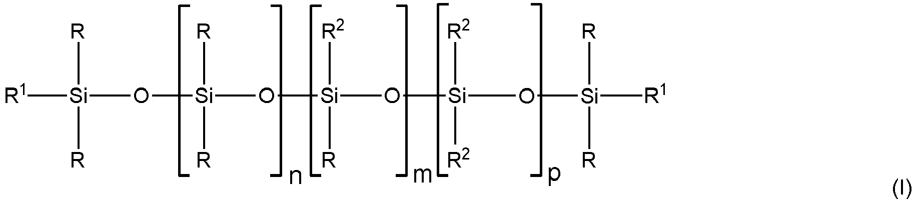 mit
R unabhängig voneinander ein Alkylrest mit 1 bis 11, bevorzugt 1 bis 4 Kohlenstoffatomen, vorzugsweise ein Methylrest,
R¹ unabhängig voneinander gleich R oder ein Polyesterrest,
R² unabhängig voneinander gleich R oder ein Kohlenwasserstoffrest mit 12 bis 36 Kohlenstoffatomen, vorzugsweise von 14 bis 30 Kohlenstoffatomen, bevorzugt von 16 bis 26 Kohlenstoffatomen,
n, m und p unabhängig voneinander von 0 bis 58,
mit der Maßgabe,
dass N = n + m + p + 2 von 10 bis 100, vorzugsweise 15 bis 60 ist
   und
dass alle R¹ ungleich R sind wenn alle R² gleich R sind und wenigstens ein R² ungleich R ist wenn alle R¹ gleich R sind
   und/oder
dass alle Reste R¹ ungleich R sind, wenn m und p null sind und dass m oder p, vorzugsweise m, ungleich 0 ist, wenn alle Reste R¹ gleich R sind.
als Phasentransferreagenz. Es handelt sich um Polyestersiloxane oder Alkylsiloxane.

Die in den Formeln verwendeten Indices sind als statistische Mittelwerte (Zahlenmittel) zu betrachten.

Vorzugsweise sind solche Verbindungen der Formel (I) vorhanden, bei denen p = 0 ist.

Handelt es sich bei den Resten R¹ um Polyesterreste, so sind diese vorzugsweise aus 3 bis 30, bevorzugt aus 8 bis 25 und besonders bevorzugt aus 15 bis 22 Estereinheiten aufgebaut. Als Startalkohole können die Polyesterreste solche Alkoholreste aufweisen, die sich von primären ungesättigten Alkoholen ableiten (siehe Herstellverfahren). Die Polyesterreste weisen vorzugsweise eine Struktur gemäß Formel (II) auf:

-R_{q}-(Rᵣ)_{z}H (II)

mit
R_{q} = -(CH₂)ₓ-O-,
Rᵣ = C(O)-(CH₂)_{y}-O-
x = 2 bis 10, vorzugsweise 3 bis 7, insbesondere 6 und
y = 2 bis 10, vorzugsweise 3 bis 8 und bevorzugt 4 oder 5.
Z = 3 bis 30, bevorzugt aus 8 bis 25 und besonders bevorzugt aus 15 bis 22.

Die Bezeichnungen "q" und "r" dienen lediglich der Unterscheidung der Reste von den anderen "R"-Resten und stellen keine Indizes dar, die mit irgendeinem Zahlenwert hinterlegt sind.

Die Polyesterreste können aus gleichen oder unterschiedlichen Ausgangsmolekülen aufgebaut sein. Vorzugsweise sind die Polyesterreste aus gleichen Ausgangsmolekülen aufgebaut. Bevorzugte Polyesterreste sind solche, die durch, vorzugsweise ringöffnende, (Poly-)Veresterung von Lactonen erhalten werden. Besonders bevorzugt sind die Polyesterreste solche, die durch (Poly-)veresterung von Caprolacton oder Valerolacton, insbesondere von ε-Caprolacton, 3,5,5-Trimethyl-Caprolacton oder δ-Vaterolacton und besonders bevorzugt von ε-Caprolacton erhalten werden. Bevorzugte Verbindungen der Formel (I) bei denen R¹ Polyesterreste sind solche, bei denen der Polyesterrest aus 3 bis 30, bevorzugt aus 8 bis 25 und besonders bevorzugt aus 15 bis 22 ε-Caprolacton-Einheiten aufgebaut ist. Vorzugsweise sind die Reste R1 identische Polyesterreste.

Sind die Reste R¹ alle gleich R, mit R vorzugsweise Methylrest, ist R² bevorzugt ein Kohlenwasserstoffrest mit 12 bis 36 Kohlenstoffatomen, vorzugsweise von 14 bis 30 Kohlenstoffatomen, bevorzugt von 16 bis 26 Kohlenstoffatomen, so ist N bevorzugt größer-gleich 30, vorzugsweise von 40 bis 50. p ist im genannten Fall vorzugsweise 0 und m beträgt bevorzugt von 30 bis 48.

Sind einer oder mehrere der Reste R¹ ein Polyesterrest, so ist N bevorzugt 10 bis 45, bevorzugt 18 bis 35 und besonders bevorzugt 20 bis 30.

Geeignete Verbindungen der Formel (I) sind z.B. TEGOMER® H-Si 6440 P und TEGOPREN 6846, welche von Evonik erhalten werden können.

Die Verbindungen der Formel (I) können nach den bekannten Verfahren durch Umsetzung von entsprechenden Wasserstoffsiloxanen mit ungesättigten Kohlenwasserstoffen oder ungesättigten Alkoholen und anschließender (Poly-)-Veresterung oder durch direkte Umsetzung von ungesättigten Polyestern mit Wasserstoffsiloxanen erhalten werden. Die Umsetzung kann wie in EP 1 640 418 beschrieben durch Hydrosilylierung bzw. durch dehydrogenative Hydrosilylierung erfolgen. Die Herstellung Polyesterreste aufweisender Polysiloxane kann z. B. EP 0 208 734 entnommen werden.

Die mindestens eine Verbindung der Formel (I) ist vorzugsweise in einem Anteil von 0,1 bis 10 Gew.-%, bezogen auf das Gesamtgewicht des homogenen Gemischs (einschließlich der mindestens einen Verbindung der Formel (I) und der mindestens einen Verbindung der Formel (II)), enthalten. Bevorzugt liegt der Anteil an Polyestersiloxanen im Bereich von 0,5 bis 8 Gew.-%, besonders bevorzugt im Bereich von 0,9 bis 5 Gew.-%. Bevorzugt liegt der Anteil an Alkylsiloxanen im Bereich von 0,4 bis 9 Gew.-%, besonders bevorzugt im Bereich von 0,9 bis 6 Gew.-%.

Weiterhin ist im erfindungsgemäßen Gemisch vorzugsweise mindestens eine Verbindung der Formel (III)

R³O(SO)ₐ(EO)_{b}(PO)_{c}(BO)_{d}R⁴, (III)

wobei
R³ = ein geradkettiger oder verzweigter oder cycloaliphatischer Rest mit 2 bis 30 Kohlenstoffatomen,
R⁴ = Wasserstoff, ein Acylrest, Alkylrest oder Carbonsäurerest mit jeweils 1 bis 8 C-Atomen,
SO = Styrenoxid,
EO = Ethylenoxid,
PO = Propylenoxid,
BO Butylenoxid und
a = 1 bis 5,
b = 3 bis 50,
c = 0 bis 10,
d = 0 bis 10 sind,
wobei a, c oder d von 0 verschieden, b > = a+c+d ist,
als Phasentransferreagenz enthalten. Es handelt sich um Styrenoxid-Polyether.

Durch die verschiedenen Alkylenoxidmonomere und deren Anteil am Gesamtpolymer lässt sich spezifisch die Hydrophobie/Hydrophilie-Balance steuern. Besonders bevorzugt sind blockweise Anordnungen mit endständigen, eher hydrophoben Gruppierungen wie Propylenoxid oder insbesondere Butylenoxid.

Fettalkoholpolyglycolether stellen bekanntermaßen Stoffe dar, die großtechnisch vor allem durch Anlagerung von Ethylenoxid- und/oder Propylenoxid in Gegenwart von dem Stand der Technik entsprechenden sauren oder basischen Katalysatoren vorzugsweise unter Druck und erhöhter Tempera-tur hergestellt werden. In Abhängigkeit von der Natur des verwendeten Katalysators können die Pro-dukte eine mehr oder weniger eingeengte Homologenverteilung aufweisen.

Die derart entstandenen hydroxylterminierten Polyalkylenoxide können jedoch auch mit Carbonsäu-ren und/oder deren Anhydriden verestert werden, um einen Verschluss der OH-Gruppe zu erreichen. Die Veresterungsreaktion kann mit aliphatischen oder aromatischen Carbonsäuren, die 2 bis 18 C-Atome aufweisen, durchgeführt werden. Die Veresterung kann dabei in an sich bekannter Weise un-ter saurer Katalyse erfolgen. Anstatt der Veresterung kann als endgruppenverschließende Reaktion auch die Veretherung gewählt werden. Hierzu werden die Verbindungen unter den Konditionen der Williamschen Ethersynthese, dem Stand der Technik entsprechend mit aromatischen oder aliphati-schen, geradkettigen oder verzweigten Alkylhalogeniden umgesetzt. Besonders bevorzugt ist die Reaktion mit Methylchlorid. Auf diese Weise lassen sich die Hydroxylendgruppen sowohl teilweise als auch vollständig verethern.

Die mindestens eine Verbindung der Formel (III) ist vorzugsweise in einem Anteil von 0,1 bis 20 Gew.-%, bezogen auf das Gesamtgewicht des homogenen Gemischs (einschließlich der mindestens einen Verbindung der Formel (I) und der mindestens einen Verbindung der Formel (III)), enthalten. Bevorzugt liegt der Anteil an Styrenoxid-Polyether im Bereich von 0,9 bis 15 Gew.-%, besonders bevorzugt im Bereich von 2 bis 12 Gew.-%.

Das erfindungsgemäße Gemisch kann sowohl mindestens eine Verbindung der Formel (I) als auch mindestens eine Verbindung der Formel (III) enthalten.

Die erfindungsgemäßen Gemische enthalten bevorzugt Additive wie Farbmittel, Pigmente, organische Farbstoffe, Lichtstabilisatoren, UV-Stabilisatoren, UV-Absorber, IR-Absorber, antimikrobielle Wirkstoffe, Flammschutzmittel, Thermostabilisatoren, Antioxidantien, vernetzende Polymere, faserverstärkende Zusatzstoffe organischer oder anorganischer Art, Schlagzähmodifizierer und ihre Mischungen. Bevorzugt sind in den erfindungsgemäßen Gemischen nicht mehr als 10 Gew.-%, besonders bevorzugt nicht mehr als 5 Gew.-% und insbesondere nicht mehr als 2 Gew.-% Hilfs- und Füllstoffe, jeweils bezogen auf das Gesamt-gewicht aus Gemisch und Additiv, enthalten.

Ein weiterer Gegenstand sind geschäumte Formteile, die aus dem erfindungsgemäßen Gemisch erhältlich sind. Die Formteile weisen vorzugsweise eine Dichte von maximal 350 kg/m³, bevorzugt von maximal 130 kg / m³ auf.

Ein Verfahren 1 zur Herstellung eines erfindungsgemäßen geschäumten Formteils umfasst die Schritte
a. Schmelzen einer erfindungsgemäßen Mischung,
b. Extrudieren der geschmolzenen Mischung unter Erhalt von Granulat,
c. Spritzgießen des Granulats unter Erhalt eines Formteils oder einer extrudierten Platte und
d. Einbringen des Formteils oder der extrudierten Platte in einen Autoklaven und Beaufschlagung mit einem physikalischen Treibmittel unter Erhalt eines geschäumten Formteils.

Das Verfahren 1 kann beispielsweise folgendermaßen durchgeführt werden: Granulate aus PEBA und Poly(meth)acrylat werden als Trockenvormischung oder einzeln über gravimetrische oder volumetrische Dosierwaagen in einen auf die entsprechende Temperatur vorgeheizten Compounder (z. B. Doppelschnecken-Compounder der Firmen Coperion oder Berstorff oder Einschnecken Compounder der Firma Buss oder andere gängige Modelle) dosiert. In der entsprechenden Schnecke wird bei der entsprechenden Drehzahl das Granulat zu einer Schmelze erhitzt. In dem Compounder wird die Mischung bei einer geeigneten Schneckendrehzahl zu einer Schmelze erhitzt. Die Schmelze wird durch Düsenplatte zu Schmelze-Strängen gepresst. Diese Schmelze-Stränge können in einem Wasserbad abgekühlt werden, beispielsweise auf Raumtemperatur. Die abgekühlten und ausgehärteten Stränge werden in einem Strang-Granulierer zu Granulat geschnitten. Alternativ können sie mittels Unterwassergranulierung (z. B. erhältlich von den Fa. Econ, BKG, Gala) zu Granulat geschnitten und abgekühlt werden. Das entstandene Granulat wird in Trockenluft-Trocknern für mehrere Stunden bei beispielsweise 50 bis 95 °C zu einem reduzierten Wassergehalt bspw. 0,001 bis 0,1 %, getrocknet. Die getrockneten Granulate werden bspw. auf einer Spritzgussmaschine Mehrfach-Zonen-Schnecke bei einer Zylindertemperatur von 150 bis 300 °C zu Platten verarbeitet. Die Spritzgussform wird anschließend gekühlt. Aus den entstandenen Spritzgussplatten können würfelförmige Probekörper gesägt werden. Die Probekörper können anschließend in einem Standard-Autoklaven über einen Zeitraum von mehreren Stunden bei einem Druck von 100 bis 400 bar und einer Temperatur von 80 bis 180 °C mit CO₂ gesättigt werden. Das Schäumen erfolgt unter spontaner Druckentlastung.

Ein weiteres Verfahren 2 umfasst die Schritte
a. Schmelzen einer erfindungsgemäßen Mischung und
b. Beaufschlagung der geschmolzenen Mischung mit einem physikalischen Treibmittel und Extrudieren der geschmolzenen Mischung mittels Lochplatte oder geeigneter Düsen unter Erhalt eines geschäumten Formteils.

Das Verfahren 2 kann beispielsweise folgendermaßen durchgeführt werden: Granulate aus PEBA und Poly(meth)acrylat werden als Trockenvormischung oder einzeln über gravimetrische oder volumetrische Dosierwaagen in einen auf die entsprechende Temperatur vorgeheizten Compounder (z. B. Doppelschnecken-Compounder der Firmen Coperion oder Berstorff oder Einschnecken Compounder der Firma Buss oder andere gängige Modelle) dosiert. In der entsprechenden Schnecke wird bei der entsprechenden Drehzahl das Granulat zu einer Schmelze erhitzt. Das Treibmittel, z.B. CO₂, wird in die Schmelze gegeben und dort verteilt. In einer zweiten Schnecke wird die Schmelze abgekühlt, u.a. weil das Treibmittel eine viskositätsmindernde Wirkung hat. Als Düsenplatte wird hier z.B. eine Breitschlitzdüse entsprechend der Wunschgeometrie in Dicke und Breite gewählt. An dieser Düse wird die Schmelze spontan bei Austritt expandieren (aufschäumen) und abkühlen zu einem geschäumten Extrudat. Entsprechend der Wunschgeometrie kann das geschäumte Extrudat entweder mit Hilfe eines Kalanders als Sheet oder mit Hilfe anderer kontinuierlicher Abzugsvorrichtungen (aus der Profilextrusion bekannt) abgezogen und abgekühlt werden. Nach erfolgreichem Abkühlprozess wird das geschäumte Extrudat auf die entsprechende Wunschlänge geschnitten.

Das Verfahren 2 stellt ein kontinuierliches Verfahren dar und ist daher gegenüber Verfahren 1 bevorzugt.

Das geschäumte Bauteil kann als Schuhsohle, Stollenmaterial, Isoliermaterial, Dämmstoff, Dämpfungsbauteil, Leichtbauteil oder in einer Sandwichstruktur verwendet werden.

### Beispiele

Es wurden Trockenvormischungen enthaltend PEBA und Poly(meth)acrylat aus Granulaten hergestellt. Diese Mischungen wurden über gravimetrische Dosierwaagen in den auf 240 °C vorgeheizten Doppelschnecken-Compounder Coperion ZSK25 WLE mit einem Durchsatz von 20 kg/h dosiert. Als Schneckenkonfiguration wurde eine Standardschnecke wie z.B. für die Produktion von Polyamidcompounds eingesetzt. In dem Doppelschnecken-Compounder wurde die Mischung bei einer Schneckendrehzahl von 250 U/min zu einer Schmelze erhitzt. Die Schmelze wurde durch eine 3-Loch-Düsenplatte mit je 4 mm Durchmesser zu Schmelze-Strängen gepresst. Diese Schmelze-Stränge wurden in einem Wasserbad bei Raumtemperatur abgekühlt. Die abgekühlten und ausgehärteten Stränge wurden in einem Standard-Strang-Granulierer zu Granulat geschnitten. Das entstandene Granulat wurde in Trockenluft-Trocknern für 12 h bei 80 °C zu einem Wassergehalt <0,02 % getrocknet. Die getrockneten Granulate wurden auf einer Standard-Spritzgussmaschine (Engel Victory 650/200) mit einer Standard-3-Zonen-Schnecke bei einer Zylindertemperatur von 240 °C zu Platten verarbeitet. Die Spritzgussform wurde auf 40 °C gekühlt. Aus den entstandenen Spritzgussplatten wurden würfelförmige Probekörper mit wahlweise Kantenlängen von 30x10x5 mm oder Kantenlängen von 40x30x10 mm gesägt. Die Probekörper wurden in einem Standard-Autoklaven über einen Zeitraum von 4,5 h (kleine Probekörper) oder 95 h (große Probekörper) bei einem Druck von 300 bar und einer Temperatur von 140 °C mit CO₂ gesättigt. Das Schäumen erfolgte unter spontaner Druckentlastung.

### Folgende Substanzen wurden eingesetzt:

PEBA 1: Aminoterminiertes PEBA enthaltend 30 Gew.-% an Polyether-Blöcken (VESTAMID® E58-S4)
PEBA 2: Carboxylterminiertes PEBA enthaltend 20 Gew.-% an Polyether-Blöcken (VESTAMID® E62-S3)
   (Meth)acrylat 1: Polymethylmethacrylimid, wie in EP 1 755 890 B1 beschrieben, mit einem Molekulargewicht von 100000 g/mol (ermittelt durch GPC gegen PMMA-Standard), bestehend aus 30 Gew.-% Einheiten nach Formel IV, wobei R¹, R² und R³ jeweils eine Methylgruppe sind, aus 57 Gew.-% Methylmethacrylat (MMA)-Einheiten, aus 10 Gew.-% Methacrylsäureanhydrid (MSA)-Einheiten und aus 3 Gew.-% Methacrylsäure (MAS)-Einheiten (ermittelt durch IR-Spektroskopie).
   (Meth)acrylat 2: Schlagzähmodifiziertes Poly(meth)acrylat, mit einem Molekulargewicht von 200000 g/mol (ermittelt durch GPC gegen PMMA-Standard), bestehend aus 55 Gew.-% Methylmethacrylat (MMA)-Einheiten, 20 Gew.-% Styrol-Einheiten, 2 Gew.-% Ethylacrylat (EA)-Einheiten sowie 23 Gew.-% Kautschuk. Bei dem Kautschuk handelt es sich um Polybutadien, gegrafted mit einer Schale aus MMA- und Styrol-Einheiten und einem Wirkdurchmesser für die Schlagzähigkeit (entspricht einem mittleren Agglomeratsdurchmesser) von 300 nm (ermittelt durch Transmissionselektronenmikroskop).
   (Meth)acrylat 3: Schlagzähmodifiziertes Poly(meth)acrylate, wie (Meth)acrylat 2, hier mit einem Molekulargewicht von 140000 g/mol (ermittelt durch GPC gegen PMMA-Standard).
PA12: carboxylterminiertes Polyamid 12 (VESTAMID® L1901)

**Tabelle 1: Eingesetzte Zusammensetzungen #1 bis #9.**

| | Polyamid | Poly(meth)acrylat | Dichte in kg/cm³ (ungeschäumt) |
|---|---|---|---|
| #1* | 99 Gew.-% PEBA 1 | 1 Gew.-% (Meth)acrylat 1 | 1042 / 1030 |
| #2 | 90 Gew.-% PEBA 1 | 10 Gew.-% (Meth)acrylat 1 | 1045 |
| #3 | 80 Gew.-% PEBA 1 | 20 Gew.-% (Meth)acrylat 1 | 1062 |
| #4 | 70 Gew.-% PEBA 1 | 30 Gew.-% (Meth)acrylat 1 | 1079 |
| #5* | 70 Gew.-% PEBA 2 | 30 Gew.-% (Meth)acrylat 1 | 1069 |
| #6* | 70 Gew-% PA12 | 30 Gew.-% (Meth)acrylat 1 | 1065 |
| #7 | 70 Gew-% PEBA 1 | 30 Gew.-% (Meth)acrylat 2 | 1032/1049 |
| #8 | 70 Gew-% PEBA 1 | 30 Gew.-% (Meth)acrylat 3 | 1005/1047 |
| #9* | 100 Gew.-% PEBA 1 | - | 1010 |

| | | | |
|---|---|---|---|
| * nicht erfindungsgemäß | | | |

Im Anschluss wurden die geschäumten Zusammensetzungen unter dem Rasterelektronenmikroskop optisch untersucht und folgende Eigenschaften ermittelt bzw. errechnet:
d_{cell}: Mittlerer Durchmesser der Zellen in µm
t_{cell}: Mittlere Dicke der Zellwände in µm
N_{cell}: Anzahl der Zellen pro cm³
ρ: Dichte des geschäumten Materials in kg/cm³
Δρ: Dichteänderung gegenüber nichtgeschäumtem Material

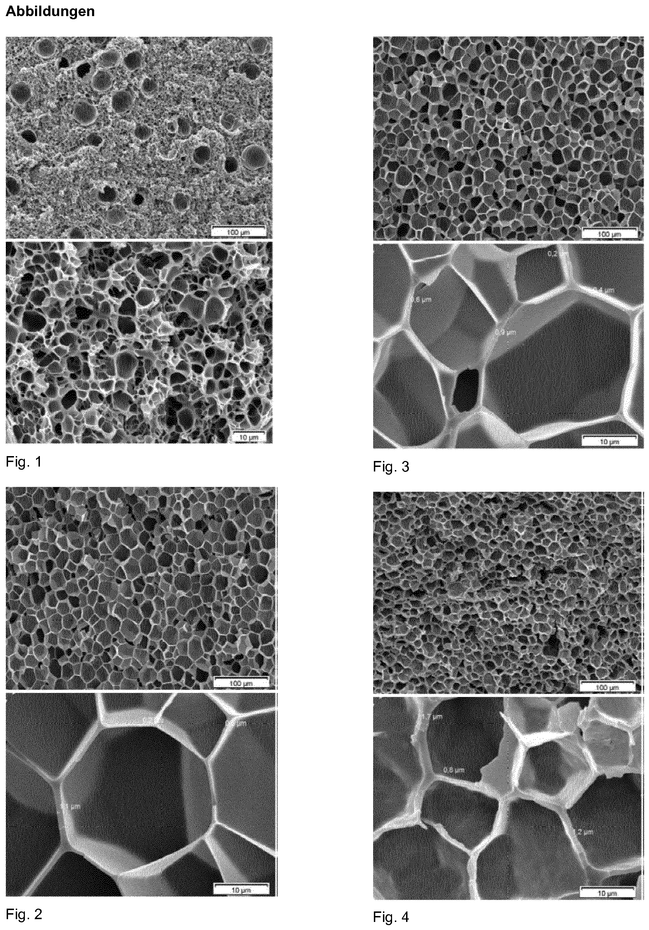

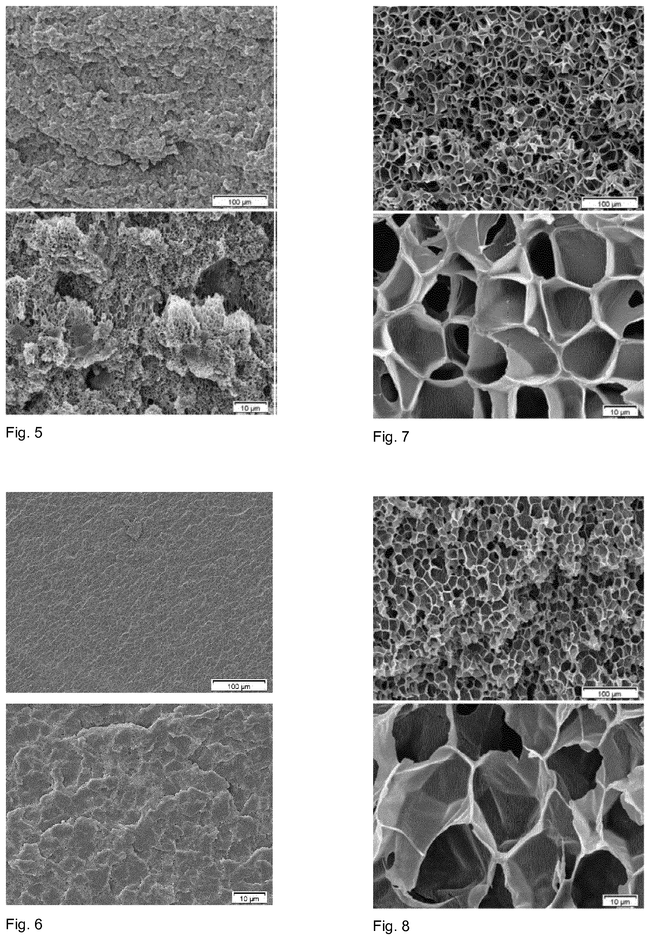

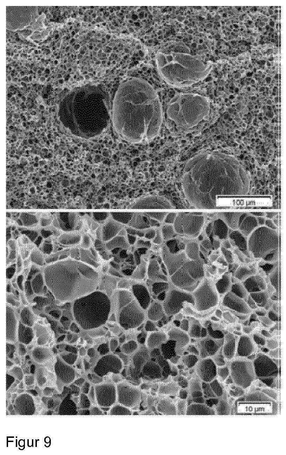

Schaumqualität: Optische Bewertung der Schäume anhand der Abbildungen 1 bis 9 mit bei unterschiedlichen Auflösungen
1: inhomogene Zellverteilung, uneinheitliche Zellen
2: homogene Zellverteilung, einheitliche Zellgröße

**Tabelle 2: Physikalische Messdaten der Zusammensetzungen #1 bis #9.**

| | T in °C | d_{cell} | t_{cell} | N_{cell} | ρ | Δρ | Schaumqualität |
|---|---|---|---|---|---|---|---|
| #1* | 140 | 6 | 0,5 | 48·10⁹ | 460 | 55 % | 1 |
| #2 | 140 | 25 | 0,9 | 0,11·10⁹ | 110 | 89 % | 2 |
| #3 | 140 | 24 | 0,9 | 0,14·10⁹ | 110 | 90 % | 2 |
| #4 | 140 | 23 | 1,2 | 0,14·10⁹ | 260 | 76 % | 2 |
| #5* | 140 | 0,7 | < 0,5 | 7500·10⁹ | 650 | 40 % | 1 |
| #6* | 140 | *** | *** | *** | 900 | 15 % | 1 |
| #7 | 140 | 20 | 0,7 | 0,24·10⁹ | 110 | 90 % | 2 |
| #8 | 140 | 23 | < 0,5 | 0,12·10⁹ | 90 | 91 % | 2 |
| #9* | 140 | ** | ** | ** | ** | ** | 1 |

| | | | | | | | |
|---|---|---|---|---|---|---|---|
| * nicht erfindungsgemäß ** Schaum fiel zusammen *** nicht bestimmt, da Dichte zu hoch | | | | | | | |

Die Schäume der erfindungsgemäßen Zusammensetzungen #2 bis 4 sowie #7 und #8 zeigten gegenüber den Zusammensetzungen des Standes der Technik einen hohen Zellendurchmesser d_{cell} von 21 bis 25 µm sowie eine verringerte Anzahl an Zellen pro Kubikzentimeter N_{cell}. Die Dichte lag im Bereich von 90 bis 260 kg/cm³ und konnte gegenüber dem Ausgangsmaterial um 76 % bis 91 % reduziert werden. Darüber hinaus zeigen die Schäume der erfindungsgemäßen Zusammensetzung eine homogene Zellverteilung mit annähernd gleichgroßen Zellen (vgl. Fig. 2 bis 4, 7 und 8).

Bei den Materialien des Standes der Technik wurden deutlich geringere Dichtereduzierungen von 15 % bis 55 % verzeichnet (#1, #5, #6); ebenso lagen die die mittlere Durchmesser der Zellen unter den Werten der erfindungsgemäßen Zusammensetzungen (#1, #5). Mischung #6 zeigte eine derart hohe Dichte, dass Durchmesser und die Anzahl der Zellen nicht bestimmt werden konnten. Der Schaum der Mischung #9 fiel in sich zusammen. Die Schaumstrukturen wiesen eine inhomogene Zellverteilung mit unterschiedlich großen Zellen auf (vgl. Fig. 1, 5, 6 und 9).

Die nicht-erfindungsgemäßen Zusammensetzungen #1 (PEBA-Anteil 99 Gew.-%), #5 (carboxylterminiertes PEBA), #6 (Polyamid 12 statt PEBA) und #9 (PEBA ohne Acrylat) erwiesen sich als nicht geeignete Schaummaterialien. Erfindungsgemäße Mischungen #2 bis #4 sowie #6 und #7 aus aminoterminiertem PEBA mit höherem Poly(meth)acrylatanteilen gegenüber Mischung #1 zeigten homogene, regelmäßige Zellen.

## Patentansprüche

1. Gemisch enthaltend
a. mindestens ein aminogeregeltes Polyetherblockamid (PEBA),
b. mindestens ein Poly(meth)acrylat ausgewählt aus Poly(meth)acrylimiden, Polyalkyl(meth)acrylaten und Mischungen daraus,
wobei das Massenverhältnis PEBA zu Poly(meth)acrylat 95:5 bis 60:40 beträgt,
wobei das Polyalkyl(meth)acrylat 80 Gew.-% bis 99 Gew.-% Methylmethacrylat (MMA)-Einheiten und 1 Gew.-% bis 20 Gew.-%, C1-C10-Alkylacrylat-Einheiten, bezogen auf das Gesamtgewicht an Polyalkyl(meth)acrylat, enthält.

2. Gemisch nach Anspruch 1, **dadurch gekennzeichnet, dass** das PEBA 20 bis 60 mmol/kg Aminoendgruppen, vorzugsweise 30 bis 50 mmol/kg Aminoendgruppen, enthält.

3. Gemisch nach einem der vorherigen Ansprüche, **dadurch gekennzeichnet, dass** der Anteil an Polyether im PEBA 10 bis 50 Gew.-%, bezogen auf das Gesamtgewicht an PEBA, enthält.

4. Gemisch nach einem der vorherigen Ansprüche, **dadurch gekennzeichnet, dass** das PEBA eine Shore-Härte D von 30 bis 70, vorzugsweise von 35 bis 65, aufweist, gemessen nach ISO 868 bei 23 °C ± 2 °C.

5. Gemisch nach einem der vorherigen Ansprüche, **dadurch gekennzeichnet, dass** das Poly(meth)acry-limid die folgenden Gruppen umfasst:
a. N-Acrylalkylimid der Formel (IV), 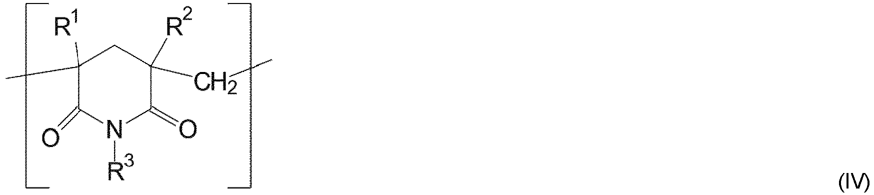 worin R¹ und R² gleich oder verschieden Wasserstoff oder eine Methylgruppe und R³ Wasserstoff, ein Alkyl- mit 1 bis 20 Kohlenstoffatomen oder ein Arylrest mit 3 bis 20 Kohlenstoffatomen bedeuten
b. (Meth)acrylsäure,
c. (Meth)acrylsäureanhydrid, und
d. (Meth)acrylat,
wobei die Gruppen a. bis d. zu jeweils mindestens 1 Gew-%, bezogen auf das Gesamtgewicht an Poly(meth)acrylimid, enthalten sind.

6. Gemisch nach Anspruch 5, **dadurch gekennzeichnet, dass** das Poly(meth)acrylimid 10 - 95 Gew.-%, bevorzugt 20 - 70 Gew.-% und besonders bevorzugt 25 - 40 Gew.-% Einheiten der Formel (IV) enthält.

7. Gemisch nach einem der vorherigen Ansprüche, **dadurch gekennzeichnet, dass** das Molekulargewicht Mw des Poly(meth)acrylimids im Bereich von 50000 bis 150000 g/mol liegt (ermittelt durch GPC gegen PMMA-Standard).

8. Gemisch nach einem der vorherigen Ansprüche, **dadurch gekennzeichnet, dass** Polyalkyl(meth)acrylat Styrol als Comonomer enthält.

9. Gemisch nach einem der vorherigen Ansprüche, **dadurch gekennzeichnet, dass** das Polyalkyl(meth)acrylat ein schlagzähmodifiziertes Polymer ist.

10. Gemisch nach einen der vorherigen Ansprüche, **dadurch gekennzeichnet, dass** das Gemisch mindestens eine der Komponenten ausgewählt aus Farbmittel, Pigmente, organische Farbstoffe, Lichtstabilisatoren, UV-Stabilisatoren, UV-Absorber, IR-Absorber, antimikrobielle Wirkstoffe, Flammschutzmittel, Thermostabilisatoren, Antioxidantien, vernetzende Polymere, faserverstärkende Zusatzstoffe organischer oder anorganischer Art, Schlagzähmodifier und Mischungen davon enthält.

11. Geschäumtes Formteil, erhältlich aus einem Gemisch nach einem der Ansprüche 1 bis 10.

12. Verfahren zur Herstellung eines geschäumten Formteils, umfassend die Schritte
a. Schmelzen einer Mischung gemäß einem der Ansprüche 1 bis 10,
b. Extrudieren der geschmolzenen Mischung unter Erhalt von Granulat,
c. Spritzgießen des Granulats unter Erhalt eines Formteils oder einer extrudierten Platte und
d. Einbringen des Formteils oder der extrudierten Platte in einen Autoklaven und Beaufschlagung mit einem physikalischen Treibmittel unter Erhalt eines geschäumten Formteils.

13. Verfahren zur Herstellung eines geschäumten Formteils, umfassend die Schritte
a. Schmelzen einer Mischung gemäß einem der Ansprüche 1 bis 10 und
b. Beaufschlagung der geschmolzenen Mischung mit einem physikalischen Treibmittel und Extrudieren der geschmolzenen Mischung mittels Lochplatte oder Düse unter Erhalt eines geschäumten Formteils.

14. Verwendung eines geschäumten Formteils nach Anspruch 11 als Schuhsohle, Stollenmaterial, Isoliermaterial, Dämmstoff, Dämpfungsbauteil, Leichtbauteil oder in einer Sandwichstruktur.

## Claims

1. Mixture comprising
a. at least one amino-regulated polyether block amide (PEBA),
b. at least one poly(meth)acrylate selected from poly(meth)acrylimides, polyalkyl(meth)acrylates and mixtures thereof,
where the mass ratio of PEBA to poly(meth)acrylate is 95:5 to 60:40,
where the polyalkyl(meth)acrylate contains 80% by weight to 99% by weight of methyl methacrylate (MMA) units and 1% by weight to 20% by weight of C1-C10-alkyl acrylate units, based on the total weight of polyalkyl(meth)acrylate.

2. Mixture according to Claim 1, **characterized in that** the PEBA contains 20 to 60 mmol/kg of amino end groups, preferably 30 to 50 mmol/kg of amino end groups.

3. Mixture according to either of the preceding claims, **characterized in that** the fraction of polyether in the PEBA contains 10% to 50% by weight, based on the total weight of PEBA.

4. Mixture according to any of the preceding claims, **characterized in that** the PEBA has a Shore D hardness of 30 to 70, preferably of 35 to 65, measured to ISO 868 at 23°C ± 2°C.

5. Mixture according to any of the preceding claims, **characterized in that** the poly(meth)acrylimide comprises the following groups:
a. N-alkylacrlimide of the formula (IV) 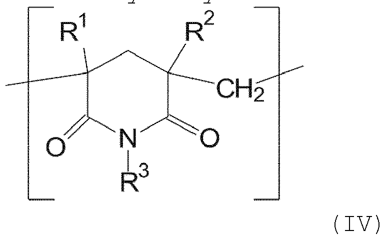 in which R¹ and R² are the same or different and are hydrogen or a methyl group and R³ is hydrogen, an alkyl radical having 1 to 20 carbon atoms or an aryl radical having 3 to 20 carbon atoms
b. (meth)acrylic acid,
c. (meth)acrylic anhydride, and
d. (meth)acrylate,
where groups a. to d. are each present to an extent of at least 1% by weight, based on the total weight of poly(meth)acrylimide.

6. Mixture according to Claim 5, **characterized in that** the poly(meth)acrylimide contains 10-95% by weight, preferably 20-70% by weight and more preferably 25-40% by weight of units of the formula (IV).

7. Mixture according to any of the preceding claims, **characterized in that** the molecular weight Mw of the poly(meth)acrylimide is in the range from 50 000 to 150 000 g/mol (determined by GPC against PMMA standard).

8. Mixture according to any of the preceding claims, **characterized in that** polyalkyl(meth)acrylate contains styrene as comonomer.

9. Mixture according to any of the preceding claims, **characterized in that** the polyalkyl(meth)acrylate is an impact-modified polymer.

10. Mixture according to any of the preceding claims, **characterized in that** the mixture contains at least one of the components selected from colourants, pigments, organic dyes, light stabilizers, UV stabilizers, UV absorbers, IR absorbers, antimicrobial actives, flame retardants, heat stabilizers, antioxidants, crosslinking polymers, organic or inorganic fibre-reinforcing additives, impact modifiers and mixtures thereof.

11. Foamed moulding obtainable from a mixture according to any of Claims 1 to 10.

12. Process for producing a foamed moulding, comprising the steps of
a. melting a mixture according to any of Claims 1 to 10,
b. extruding the molten mixture to obtain pellets,
c. injection-moulding the pellets to obtain a moulding or an extruded sheet and
d. introducing the moulding or the extruded sheet into an autoclave and treating with a physical blowing agent to obtain a foamed moulding.

13. Process for producing a foamed moulding, comprising the steps of
a. melting a mixture according to any of Claims 1 to 10 and
b. treating the molten mixture with a physical blowing agent and extruding the molten mixture by means of a perforated plate or die to obtain a foamed moulding.

14. Use of a foamed moulding according to Claim 11 as a footwear sole, as stud material, as insulation or insulating material, as a damping component, as a lightweight component or in a sandwich structure.

## Revendications

1. Mélange contenant
a. au moins un polyéther-bloc-amide (PEBA) régulé par amino,
b. au moins un poly(méth)acrylate choisi parmi les poly(méth)acrylimides, les poly((méth)acrylates d'alkyle) et leurs mélanges,
le rapport massique de PEBA à poly(méth)acrylate étant de 95:5 à 60:40,
le poly((méth)acrylate d'alkyle) contenant 80% en poids à 99% en poids de motifs de méthacrylate de méthyle (MMA) et 1% en poids à 20% en poids de motifs d'acrylate de C1-C10-alkyle, par rapport au poids total de poly((méth)acrylate d'alkyle).

2. Mélange selon la revendication 1, **caractérisé en ce que** le PEBA contient 20 à 60 mmoles/kg de groupes terminaux amino, de préférence 30 à 50 mmoles/kg de groupes terminaux amino.

3. Mélange selon l'une quelconque des revendications précédentes, **caractérisé en ce que** la proportion de polyéther dans le PEBA contient 10 à 50% en poids, par rapport au poids total de PEBA.

4. Mélange selon l'une quelconque des revendications précédentes, **caractérisé en ce que** le PEBA présente une dureté Shore D de 30 à 70, de préférence de 35 à 65, mesurée selon la norme ISO 868 à 23°C ± 2°C.

5. Mélange selon l'une quelconque des revendications précédentes, **caractérisé en ce que** le poly(méth)acrylimide présente les groupes suivants :
a. N-acrylalkylimide de formule (IV), 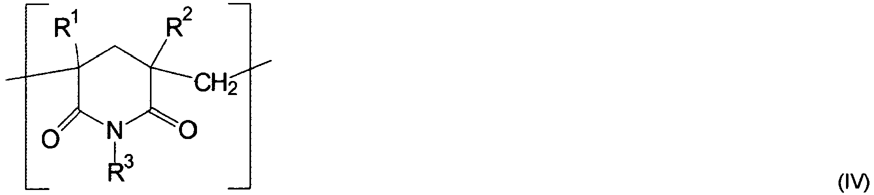 dans laquelle R¹ et R² sont identiques ou différents et signifient hydrogène ou un groupe méthyle et R³ signifie hydrogène, un radical alkyle comprenant 1 à 20 atomes de carbone ou un radical aryle comprenant 3 à 20 atomes de carbone
b. acide (méth)acrylique,
c. anhydride de l'acide (méth)acrylique et
d. (méth)acrylate,
les groupes a. à d. étant contenus respectivement à raison d'au moins 1% en poids par rapport au poids total de poly(méth)acrylimide.

6. Mélange selon la revendication 5, **caractérisé en ce que** le poly(méth)acrylimide contient 10-95% en poids, de préférence 20-70% en poids et de manière particulièrement préférée 25-40% en poids de motifs de formule (IV).

7. Mélange selon l'une quelconque des revendications précédentes, **caractérisé en ce que** le poids moléculaire Mw du poly(méth)acrylimide se situe dans la plage de 50.000 à 150.000 g/mole (déterminé par CPG par rapport à un témoin de PMMA).

8. Mélange selon l'une quelconque des revendications précédentes, **caractérisé en ce que** le poly((méth)acrylate d'alkyle) contient du styrène comme comonomère.

9. Mélange selon l'une quelconque des revendications précédentes, **caractérisé en ce que** le poly((méth)acrylate d'alkyle) est un polymère à résilience modifiée.

10. Mélange selon l'une quelconque des revendications précédentes, **caractérisé en ce que** le mélange contient au moins un des composants choisis parmi les colorants, les pigments, les colorants organiques, les stabilisants à la lumière, les stabilisants aux UV, les absorbants des UV, les absorbants des IR, les principes actifs antimicrobiens, les agents ignifuges, les stabilisants thermiques, les antioxydants, les polymères réticulants, les additifs renforçant les fibres de type organique ou inorganique, les agents de modification de la résilience et leurs mélanges.

11. Pièce façonnée moussée, pouvant être obtenue à partir d'un mélange selon l'une quelconque des revendications 1 à 10.

12. Procédé pour la fabrication d'une pièce façonnée moussée, comprenant les étapes
a. fusion d'un mélange selon l'une quelconque des revendications 1 à 10,
b. extrusion du mélange fondu avec obtention d'un granulat,
c. moulage par injection du granulat avec obtention d'une pièce façonnée ou d'une plaque extrudée et
d. introduction de la pièce façonnée ou de la plaque extrudée dans un autoclave et sollicitation par un agent gonflant physique avec obtention d'une pièce façonnée moussée.

13. Procédé pour la fabrication d'une pièce façonnée moussée, comprenant les étapes
a. fusion d'un mélange selon l'une quelconque des revendications 1 à 10 et
b. sollicitation du mélange fondu par un agent gonflant physique et extrusion du mélange fondu au moyen d'une plaque perforée ou d'une buse avec obtention d'une pièce façonnée moussée.

14. Utilisation d'une pièce façonnée moussée selon la revendication 11 comme semelle de chaussure, matériau de crampons, matériau d'isolation, matériau isolant, élément amortisseur, élément léger ou dans une structure sandwich.
